# EUROPÄISCHE PATENTANMELDUNG

(11) **EP 4 571 167 A1**
(43) Veröffentlichungstag der Anmeldung: **18.06.2025**
(21) Anmeldenummer: 24218448.9
(22) Anmeldetag: 09.12.2024
(51) Int. Cl.: F16L 37/56, F16L 39/02

(54) **VORRICHTUNG ZUR SCHNELLVERBINDUNG VON MEHREREN FLUIDFÜHRENDEN LEITUNGSABSCHNITTEN MIT EINEM ODER MEHREREN ANSCHLUSSSTUTZEN UND VERBINDUNGSANORDNUNG**

(30) Priorität: 15.12.2023 DE 102023212772
(71) Anmelder: ContiTech Techno-Chemie GmbH, 61184 Karben (DE)
(72) Erfinder: Sperling, Philipp, 34346 Hann. Münden (DE)
(74) Vertreter: Preusser, Andrea

(57) **Zusammenfassung**

Die Erfindung betrifft eine Vorrichtung (10) zur Schnellverbindung von mehreren fluidführenden Leitungsabschnitten (11a, 11b) mit einem oder mehreren Anschlussstutzen (12a, 12b), insbesondere SAE-Stutzen, wobei die Vorrichtung (10) wenigstens ein Gehäuse (13) umfasst, das einerseits einen ersten Aufnahmebereich (14), insbesondere Steckbereich, zur Aufnahme von wenigstens zwei Leitungsabschnitten (11a, 11b) und andererseits einen zweiten Aufnahmebereich (15) zur Aufnahme eines oder mehrerer Anschlussstutzen (12a, 12b) aufweist, die in Gehäuselängsrichtung (LR) aneinander angrenzen, wobei der erste Aufnahmebereich (14) wenigstens zwei Fluidkanäle (16a, 16b) umfasst, die in dem ersten Aufnahmebereich (14) voneinander getrennt verlaufen und in den zweiten Aufnahmebereich (15) derart übergehen, dass die Fluidkanäle (16a, 16b) mit dem einen oder den mehreren Anschlussstutzen (12a, 12b) fluidverbindbar sind.

## Beschreibung

Aus dem Stand der Technik ist bekannt, die Verbindung zwischen medienfördernden Leitungen und Anschlüssen mittels Schnellverbindungen oder Schnellkupplungen, sog. Quick-Connectors ("QC"), durchzuführen, um bei der Montagezeit zu sparen. Diese Schnellverbindungen werden für Geräteanschlüsse verwendet, die beispielsweise als Stutzen nach SAE-Standard, bspw. SAE-J2044, ausgebildet sind. Derartige Schnellverbindungen werden häufig in der Automobilindustrie, zum Beispiel im Niederdruckbereich fluidführender Leitungen, d.h. bei Fluiddrücken bis ca. 10 bar, an diversen Schnittstellen, beispielsweise an einem Tank, bei Pumpen, Filtern, Ventilen oder dergleichen verwendet.

Aus der DE 10 2012 107 463 A1 eine Schnellverbindungsanordnung bekannt, die eine lösbare Verbindung einer Fluidleitung mit einem Anschlussstutzen nach SAE Standard ermöglicht. Die Schnellverbindungsanordnung umfasst ein Gehäuse und einen Verriegelungskörper zum lösbaren Verriegeln des Anschlussstutzens. Das Gehäuse weist einen Fluidkanal auf, um ein Fluid zwischen einer Fluidleitung und dem Anschlussstutzen zu führen. Eine solche Schnellverbindungsanordnung kann nur eine Fluidleitung mit einem Anschlussstutzen verbinden und somit nur ein Fluid führen. Da bspw. in Kraftfahrzeugen eine Vielzahl von Fluiden zu Aggregaten und von Aggregaten geführt werden müssen, ergibt sich daraus eine hohe Anzahl an Anschlüssen bzw. Schnellverbindungsanordnungen. Herkömmlicherweise herrscht in Kraftfahrzeugen stets Platzmangel, d.h. ein begrenzter Bauraum, um Komponenten oder Leitungen anzuordnen bzw. zu führen.

Der Erfindung liegt daher die Aufgabe zugrunde, eine Vorrichtung anzugeben, die eine Schnellverbindung von mehreren fluidführenden Leitungsabschnitten mit einem oder mehreren Anschlussstutzen ermöglicht, wobei der Montageaufwand reduziert und die Anordnung in begrenztem Bauraum erleichtert ist. Ferner liegt der Erfindung die Aufgabe zugrunde, eine Verbindungsanordnung anzugeben.

Erfindungsgemäß wird die vorstehend genannte Aufgabe mit Blick auf die Vorrichtung durch den Gegenstand des Anspruchs 1 gelöst. Hinsichtlich der Verbindungsanordnung wird die Aufgabe durch Gegenstand des Anspruchs 12 gelöst.

Konkret wird die Aufgabe durch eine Vorrichtung zur Schnellverbindung von mehreren fluidführenden Leitungsabschnitten mit einem oder mehreren Anschlussstutzen, insbesondere SAE-Stutzen, wobei die Vorrichtung wenigstens ein Gehäuse umfasst, das einerseits einen ersten Aufnahmebereich, insbesondere Steckbereich, zur Aufnahme von wenigstens zwei Leitungsabschnitten und andererseits einen zweiten Aufnahmebereich zur Aufnahme eines oder mehrerer Anschlussstutzen aufweist, die in Gehäuselängsrichtung aneinander angrenzen, wobei der erste Aufnahmebereich wenigstens zwei Fluidkanäle umfasst, die in dem ersten Aufnahmebereich voneinander getrennt verlaufen und in den zweiten Aufnahmebereich derart übergehen, dass die Fluidkanäle mit dem einen oder den mehreren Anschlussstutzen fluidverbindbar sind.

Die Erfindung hat den wesentlichen Vorteil, dass in dem Gehäuse zumindest zwei Fluidkanäle ausgebildet sind, die es ermöglichen, zwei voneinander unabhängige Fluidströme zu führen. Beispielsweise können durch die Fluidkanäle wenigstens zwei unterschiedliche Fluide geführt werden. Alternativ können die wenigstens zwei Fluidkanäle Vor- und Rücklaufkanäle beispielsweise für ein einziges Fluid bilden. Wesentlich ist, dass die Vorrichtung durch die Fluidkanäle zumindest zwei voneinander getrennte Strömungswege für ein oder mehrere Fluide bereitstellt. Dies ermöglicht es, wenigstens zwei Fluid führende Leitungsabschnitte an den ersten Aufnahmebereich des Gehäuses anzuschließen und gemeinsam mit der Vorrichtung mit einem oder mehreren Anschlussstutzen zu verbinden. Dies erleichtert eine Montage von mehreren Fluid führenden Leitungsabschnitten an ein oder mehreren Anschlussstutzen, da lediglich eine einzige (Schnellverbindungs-) Vorrichtung hierfür notwendig ist.

Ferner ist von Vorteil, dass aus der gebündelten Anbindung mehrerer Fluid führender Leitungsabschnitt an der erfindungsgemäßen Vorrichtung eine kompakte Leitungsführung resultiert. Dies vereinfacht die Anordnung von mehreren solchen Leitungsabschnitten in einem begrenzten Bauraum, was insbesondere in Kraftfahrzeugen vorteilhaft ist.

Erfindungsgemäß weist das Gehäuse einen ersten und einen zweiten Aufnahmebereich auf, die sich in Gehäuselängsrichtung nacheinander befinden. Die beiden Aufnahmebereiche sind daher vorzugsweise entlang einer Gehäuselängsachse angeordnet. Die Aufnahmebereiche entsprechen im Rahmen der Erfindung Längsabschnitten des Gehäuses.

Die Aufnahmebereiche dienen dazu einerseits zwei Fluid führende Leitungsabschnitte aufzunehmen und andererseits ein oder mehrere Anschlussstutzen aufzunehmen. In dem ersten Aufnahmebereich des Gehäuses, der dazu angepasst ist, die zwei Fluid führenden Leitungsabschnitte aufzunehmen, verlaufen die Fluidkanäle zum Führen eines oder mehrere Fluide. Der erste Aufnahmebereich kann dazu einen einzigen Anschluss für beide Leitungsabschnitte oder wenigstens zwei Anschlüsse zum Anschließen jeweils eines der Leitungsabschnitte an einem der Anschlüsse aufweisen. Bevorzugt ist der erste Aufnahmebereich als Steckbereich ausgebildet, in dem die Leitungsabschnitte auf einen oder mehrere Anschlüsse gesteckt werden können. Der erste Aufnahmebereich ist vorzugsweise als Einfach- oder Mehrfachsteckbereich zur Verbindung der zumindest zwei Leitungsabschnitte mit der Vorrichtung ausgebildet.

Der oder die Anschlussstutzen sind vorzugsweise aggregatsseitig, bspw. als Teil eines Wasserkühlers, Motorblock, Ladeluftkühlers oder dergleichen, vorgesehen. Vorzugsweise handelt es sich bei dem oder den Anschlussstutzen um Stutzen, die den SAE-Standard ("Verband der Automobilingenieure-Standard") erfüllen.

Im Rahmen der Erfindung ist unter einem Fluid eine Flüssigkeit, ein Gas oder ein Gemisch davon zu verstehen.

Die erfindungsgemäße Vorrichtung kommt bevorzugt in Kraftfahrzeugen zur Verbindung einer Fluidleitung mit einem aggregatseitigen Anschlussstutzen zum Einsatz. Der Anschlussstutzen kann bspw. Teil eines Wasserkühlers, eines Motorblocks, eines Ladeluftkühlers oder dergleichen sein. Wesentlich ist, dass die Vorrichtung dazu geeignet ist, für die Verbindung jeglicher mehrfachfluidführenden Leitung mit einem Anschlussstutzen eingesetzt zu werden. Die erfindungsgemäße Vorrichtung umfasst somit ein breites Anwendungsgebiet.

Vorteilhafte Ausführungsformen der Erfindung sind in den abhängigen Ansprüchen angegeben.

Bei einer bevorzugten Ausführungsform weist der erste Aufnahmebereich wenigstens einen sich in Gehäuselängsrichtung erstreckenden Fortsatz auf, auf den eine die beiden Leitungsabschnitte aufweisende Fluidleitung aufsteckbar ist. Hier ist vorteilhaft, dass die Leitungsabschnitte auf einfache Weise mit der Vorrichtung verbindbar sind. Der Fortsatz ist bevorzugt ein integraler Bestandteil des Gehäuses. Der Fortsatz bildet vorzugsweise einen Anschlussnippel für eine die beiden Leitungsabschnitte aufweisende Fluidleitung, der sich in einer von dem zweiten Aufnahmebereich abgewandten Gehäuselängsrichtung erstreckt. Die Fluidkanäle durchziehen den Fortsatz von einem freien Ende des Fortsatzes bis hin zu dem zweiten Aufnahmebereich des Gehäuses, in dem die Fluidkanäle in einen Anschlussstutzen übergehen, der in einem von dem Gehäuse aufgenommenen Zustand in dem zweiten Aufnahmebereich angeordnet ist.

Vorzugsweise sind die Fluidkanäle in dem Fortsatz integral ausgebildet, wobei die Fluidkanäle in Gehäuselängsrichtung im Wesentlichen parallel verlaufen. Vorteilhaft ist das Gehäuse und so auch der Fortsatz einstückig ausgebildet. Die Fluidkanäle sind somit durch die Struktur des Fortsatzes definiert. Dies hat den Vorteil, dass separate Teile zur Bildung der Fluidkanäle entfallen, was den konstruktiven Aufbau der Vorrichtung vereinfacht.

Bei einer bevorzugten Ausführungsform weist die Vorrichtung einen Spalt auf, der den Fortsatz in Gehäuselängsrichtung zumindest teilweise unterteilt, wobei der Spalt einen Freiraum zwischen dem ersten und zweiten Fluidkanal bildet. Mit anderen Worten teilt der Spalt den Fortsatz in zwei Fortsatzlängsabschnitte, wobei jeder Fortsatzlängsabschnitt einen der Fluidkanäle beinhaltet. Der Fortsatz ist vorzugsweise als gespaltener Anschlussnippel ausgebildet. Der Spalt ermöglicht das Einführen eines Teilbereichs der die Leitungsabschnitte aufweisenden Fluidleitung, um einen Formschluss zu realisieren. Durch den Spalt wird somit eine aufgesteckte Fluidleitung gehalten. Der Spalt hat den weiteren Vorteil, dass die Leitungsabschnitte der Fluidleitung und die Fluidkanäle zueinander ausrichtet und somit ein verbessertes Überführen eines oder mehrerer Fluide von der Fluidleitung in die Fluidkanäle des Fortsatzes ermöglicht.

Es ist von Vorteil, wenn die Fluidkanäle jeweils einen Strömungsquerschnitt aufweisen, der im Wesentlichen halbschalenförmig, kreisringförmig oder kreisförmig ist. Die Fluidkanäle können somit mehrere unterschiedliche Querschnittsformen aufweisen, die es erlauben, je nach Fluidleitung einen entsprechenden Anschluss zu Verfügung zu stellen.

Bei einer bevorzugten Ausführungsform sind die Fluidkanäle in Bezug auf eine Gehäuselängsachse exzentrisch angeordnet. Bevorzugt sind die Fluidkanäle an der Gehäuselängsachse spiegelsymmetrisch ausgebildet. Die Fluidkanäle verlaufen hier in Gehäuselängsrichtung nebeneinander. Bei einer weiteren Ausführungsform sind die Fluidkanäle in Bezug auf die Gehäuselängsachse konzentrisch angeordnet. Beide Ausführungsformen lassen ein kompaktes Design des Gehäuses zu.

Bei einer weiteren bevorzugten Ausführungsform ist wenigstens ein Fluidführungselement zum Führen des Fluidstroms in das Gehäuse eingesetzt, wobei das Fluidführungselement die Fluidkanäle zumindest abschnittsweise zusammen mit dem Gehäuse bildet. Das Fluidführungselement ist einerseits in dem ersten Aufnahmebereich und andererseits in dem zweiten Aufnahmebereich des Gehäuses angeordnet. Bevorzugt ist das Fluidführungselement derart in den zweiten Aufnahmebereich eingeschoben, dass es zusätzlich in den ersten Aufnahmebereich ragt. Das Fluidführungselement ist derart in dem Gehäuse angeordnet, dass zwischen dem Fluidführungselement und dem Gehäuse zumindest abschnittsweise einer der Fluidkanäle gebildet ist. Das Einsetzen eines Fluidführungselements erleichtert die Herstellung, da die Komplexität des Gehäuses bzw. des ersten Aufnahmebereichs des Gehäuses verringert ist. Zudem kann das Fluidführungselement neben der Bildung des oder der Fluidkanäle weitere Funktionen, wie zum Beispiels das Halten eines Anschlussstutzens, übernehmen.

Das Fluidführungselement, insbesondere der rohrförmige Abschnitt, umfasst bevorzugt eine zentrale Durchgangsöffnung in Gehäuselängsrichtung, die einen ersten der Fluidkanäle bildet. Die zentrale Durchgangsöffnung verläuft vorzugsweise parallel zur Gehäuselängsachse. Die zentrale Durchgangsöffnung kann als Bohrung ausgebildet sein.

Das Fluidführungselement weist vorzugsweise wenigstens einen rohrförmigen Abschnitt auf, der in dem Fortsatz angeordnet ist und zusammen mit einer Innenwand des Fortsatzes einen zweiten der Fluidkanäle als Ringspalt ausbildet. Mit anderen Worten durchzieht den Fortsatz ein Ringspalt der den zweiten Fluidkanal bildet. Der erste Fluidkanal ist radial außen durch die Innenwand des Fortsatzes und radial innen durch den rohrförmigen Abschnitt des Fluidführungselements begrenzt. Der zweite Fluidkanal umgibt den ersten Fluidkanal vorzugsweise vollständig. Eine solche Anordnung der beiden Fluidkanäle führt zu einer kompakten Bauform und erleichtert einen Anschluss der die beiden Leitungsabschnitte aufweisenden Fluidleitung, da ein Ausrichten der Fluidkanäle entfällt.

Bei einer bevorzugten Ausführungsform weist das Fluidführungselement wenigstens eine Stutzenaufnahme zum Aufnehmen des Anschlussstutzens auf. Die Stutzenaufnahme ist vorzugsweise zu einem von dem ersten Aufnahmebereich abgewandten Ende des Gehäuses offen. Das Fluidführungselement erfüllt durch die Aufnahme eine Doppelfunktion. Bevorzugt mündet der erste Fluidkanal in die Stutzenaufnahme.

Bei einer weiteren bevorzugten Ausführungsform der erste Aufnahmebereich weist wenigstens zwei sich in Gehäuselängsrichtung erstreckende Fortsätze auf, wobei jeweils einer der Fluidkanäle in einem der beiden Fortsätze verläuft. Dies hat den Vorteil, dass die Komplexität des Gehäuses reduziert ist. Durch Aufteilung der beiden Fluidkanäle auf je einen Fortsatz ist das unabhängige Anschließen von zwei Fluidleitungen an der Vorrichtung möglich, wobei die Fluidleitungen jeweils einen der Fluid führenden Leitungsabschnitte umfasst. Bei dieser Ausführungsform steht der einfache Aufbau und die Variabilität im Vordergrund. Das Gehäuse ist hier bei Bedarf mit beliebig vielen Fortsätzen erweiterbar.

Die Fortsätze sind bevorzugt nebeneinander angeordnet und verlaufen im Wesentlichen parallel, wobei auf jeden der Fortsätze eine Fluidleitung aufsteckbar ist, die, insbesondere nur, einen der mehreren Leitungsabschnitte aufweist.

Die Fortsätze bilden vorzugsweise jeweils einen Anschlussnippel für eine einen der Leitungsabschnitte aufweisende Fluidleitung, der sich in einer von dem zweiten Aufnahmebereich abgewandten Gehäuselängsrichtung erstreckt. Je ein Fluidkanal durchzieht den Fortsatz von einem freien Ende des Fortsatzes bis hin zu dem zweiten Aufnahmebereich des Gehäuses, in dem derjenige Fluidkanal in einen Anschlussstutzen übergehen, der in einem von dem Gehäuse aufgenommenen Zustand in dem zweiten Aufnahmebereich angeordnet ist. Im vorliegenden Fall ist der zweite Aufnahmebereich dazu ausgebildet, wenigstens zwei Anschlussstutzen aufzunehmen.

Es ist vorteilhaft, wenn der Fortsatz oder die Fortsätze eine auf dem Außenumfang ausgebildete Haltekontur zum Halten einer Fluidleitung, insbesondere einer Schlauchleitung, aufweisen. Besonders bevorzugt umfasst die Haltekontur des Fortsatzes oder der Fortsätze wenigstens eine Ausformung, insbesondere eine Rippe oder Rille. Dadurch lässt sich auf einfache Weise eine Fluidleitung an dem Fortsatz fixieren. Bevorzugt ist diese Art von Haltekontur für den Anschluss von Schlauchleitungen.

Bei einer Ausführungsform umfasst die Vorrichtung wenigstens eine Endlagensicherungseinheit, die so angepasst ist, dass sie die Lage, insbesondere Drehlage oder Ausrichtung, eines oder mehrerer aufzunehmender Anschlussstutzen vorgibt. Durch die Endlagensicherungseinheit ist vorzugswiese der Anschlussstutzen oder sind die Anschlussstutzen nur in einer vorbestimmten Lage von dem zweiten Aufnahmebereich aufnehmbar. Dadurch wird erreicht, dass bei einem Zusammenführen, insbesondere Zusammenstecken, von Vorrichtung und Anschlussstutzen deren Fluidkanäle entsprechend korrekt ausgerichtet sind. Dies ist vorteilhaft, wenn durch die beiden Fluidkanäle unterschiedliche Fluide strömen oder die Fluidkanäle einen Vorlauf bzw. Rücklauf bilden. Diese Ausführungsform verhindert eine fehlerhafte Verbindung von Vorrichtung und Anschlussstutzen.

Nach einem nebengeordneten Aspekt betrifft die Erfindung eine Verbindungsanordnung mit einer Vorrichtung der vorstehend beschriebenen Art, wenigstens zwei Leitungsabschnitten und einem oder mehreren Anschlussstutzen, wobei die Leitungsabschnitte von dem ersten Aufnahmebereich aufgenommen sind und der eine oder die mehreren Anschlussstutzen von dem zweiten Aufnahmebereich aufgenommen sind derart, dass die beiden Leitungsabschnitte mit einem Anschlussstutzen fluidverbunden sind oder die Leitungsabschnitte jeweils mit einem Anschlussstutzen fluidverbunden sind.

Bei einer bevorzugten Ausführungsform der erfindungsgemäßen Verbindungsanordnung sind die beiden Leitungsabschnitte in einer Fluidleitung zusammengefasst und umfassen jeweils einen Fluidkanal. Alternativ kann je einer der Leitungsabschnitte in einer separaten Fluidleitung verlaufen, wobei jeder Leitungsabschnitt einen Fluidkanal umfasst.

Bei einer Ausführungsform der erfindungsgemäßen Verbindungsanordnung umfasst der Anschlussstutzen wenigstens zwei Fluidkanäle, die in dem Anschlussstutzen voneinander getrennt verlaufen und mit den zwei Fluidkanälen des ersten Aufnahmebereichs des Gehäuses der Vorrichtung fluidverbunden sind.

Bei einer weiteren Ausführungsform der erfindungsgemäßen Verbindungsanordnung sind wenigstens zwei Anschlussstutzen vorgesehen, wobei jeder der Anschlussstutzen einen Fluidkanal umfasst, der mit einem der beiden Fluidkanäle des ersten Aufnahmebereichs fluidverbunden ist.

Zu den Vorteilen der Verbindungsanordnung wird auf die im Zusammenhang mit der Vorrichtung erläuterten Vorteile verwiesen. Darüber hinaus kann die Verbindungsanordnung alternativ oder zusätzlich einzelne oder eine Kombination mehrerer zuvor in Bezug auf die Vorrichtung genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Vorrichtung und die erfindungsgemäße Verbindungsanordnung ausgestaltet sein können.

In diesen zeigen,
- Fig. 1: eine perspektivische Ansicht einer Verbindungsanordnung nach einem ersten erfindungsgemäßen Ausführungsbeispiel, wobei eine Fluidleitung von dem ersten Aufnahmebereich des Gehäuses beabstandet ist;
- Fig. 2: eine Seitenansicht der Verbindungsanordnung nach Fig. 1;
- Fig. 3: ein Längsschnitt durch die Verbindungsanordnung nach Fig. 1, wobei die Fluidleitung ausgeblendet ist;
- Fig. 4: eine perspektivische Ansicht einer Verbindungsanordnung nach einem zweiten erfindungsgemäßen Ausführungsbeispiel, wobei eine Fluidleitung von dem ersten Aufnahmebereich des Gehäuses beabstandet ist;
- Fig. 5: eine Seitenansicht der Verbindungsanordnung nach Fig. 4;
- Fig. 6: ein Längsschnitt durch die Verbindungsanordnung nach Fig. 4, wobei die Fluidleitung ausgeblendet ist;
- Fig. 7: eine perspektivische Ansicht einer Verbindungsanordnung nach einem dritten erfindungsgemäßen Ausführungsbeispiel, wobei eine Fluidleitung von dem ersten Aufnahmebereich des Gehäuses beabstandet ist;
- Fig. 8: eine Seitenansicht der Verbindungsanordnung nach Fig. 7; und
- Fig. 9: ein Längsschnitt durch die Verbindungsanordnung nach Fig. 7, wobei die Fluidleitung ausgeblendet ist.

Im Folgenden werden für gleiche oder gleichwirkende Teile dieselben Bezugsziffern verwendet.

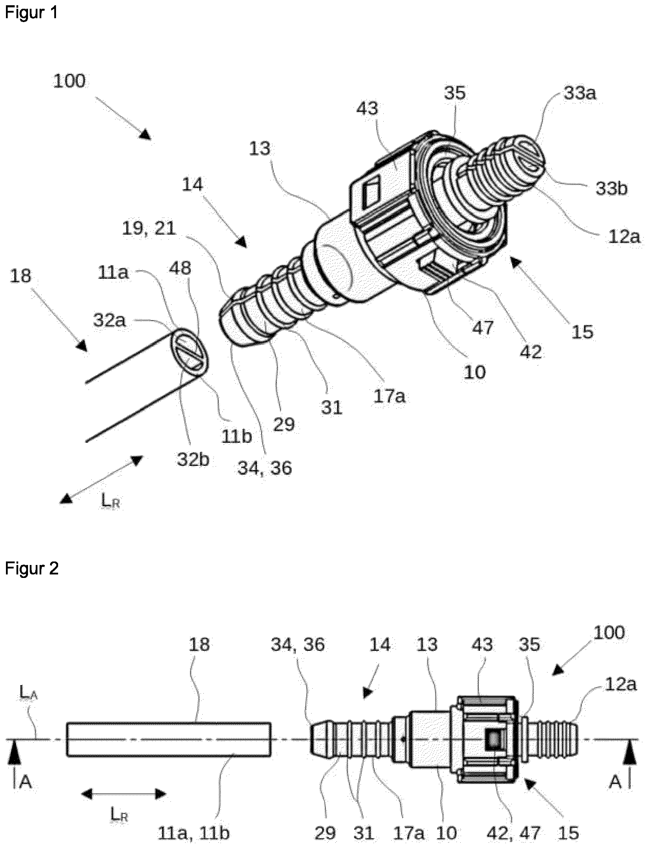

Fig. 1 bis 9 zeigen verschiedene erfindungsgemäße Ausführungsbeispiele einer Verbindungsanordnung 100 mit einer Vorrichtung 10. Die Vorrichtung 10 dient zur Schnellverbindung von wenigstens zwei Leitungsabschnitten 11a, 11b an einen oder mehreren aggregatseitigen Anschlussstutzen 12a, 12b, der/die bspw. Teil eines Wasserkühlers, eines Motorblocks, eines Ladeluftkühlers oder dergleichen eines Kraftfahrzeugs sind. Die Vorrichtung 10 ist generell dazu geeignet, für die Verbindung von wenigstens zwei Fluid führenden Leitungsabschnitten mit einem oder mehreren Anschlussstutzen eingesetzt zu werden. Die erfindungsgemäße Vorrichtung 10 ist somit nicht auf die Anwendung in Kraftfahrzeugen eingeschränkt.

Fig. 1 bis 3 zeigen eine Verbindungsanordnung 100 nach einem ersten erfindungsgemäßen Ausführungsbeispiel. Die Verbindungsanordnung 100 weist eine Vorrichtung 10, eine Fluidleitung 18 und einen Anschlussstutzen 12a auf. Die Vorrichtung 10 dient zur lösbaren Schnellverbindung von der Fluidleitung 18 und dem Anschlussstutzen 12a.

Wie in Fig. 1 erkennbar, umfasst die Fluidleitung 18 zwei Leitungsabschnitte 11a, 11b, die integral ausgebildet sind. Die Leitungsabschnitte 11a, 11b weisen jeweils einen Fluidkanal 32a, 32b auf, die parallel verlaufen. Die Fluidleitung 18 kann starr oder flexibel ausgebildet sein. Bevorzugt ist die Fluidleitung 18 durch einen Schlauch gebildet.

Die Fig. 1 bis 3 zeigen, dass die Vorrichtung 10 ein Gehäuse 13 mit einem ersten Aufnahmebereich 14 und einem zweiten Aufnahmebereich 15 aufweist. Die beiden Aufnahmebereiche 14, 15 sind in einer Gehäuselängsrichtung L_{R} aneinander angrenzend ausgebildet. Die Gehäuselängsrichtung L_{R} verläuft zu einer Gehäuselängsachse L_{A} parallel. Das Gehäuse 13 weist also eine Gehäuselängsachse La, auf. Die Aufnahmebereich 14, 15 bilden Längsabschnitte des Gehäuses 13 entlang seiner Längsachse L_{A}. Der erste Aufnahmebereich 14 dient zur Aufnahme der Fluidleitung 18, konkret der beiden Leitungsabschnitte 11a, 11b der Fluidleitung 18. Der zweite Aufnahmebereich 15 dient zur Aufnahme des Anschlussstutzens 12a.

Der erste Aufnahmebereich 14 weist, wie in den Fig. 1 bis 3 erkennbar, einen Fortsatz 17a auf, der sich in einer von dem zweiten Aufnahmebereich 15 wegführenden Gehäuselängsrichtung L_{R} erstreckt. Der Fortsatz 17a bildet einen Anschlussnippel für die Fluidleitung 18. Der Fortsatz 17a weist eine auf seinem Außenumfang 29 ausgebildete Haltekontur 31, die rippenförmig oder rillenförmig ist. Dadurch wird der Halt zwischen der aufgesteckten Fluidleitung 18 und dem Fortsatz 17a verbessert. Der zweite Aufnahmebereich 15 umfasst eine Stutzenaufnahme 28, in die der Anschlussstutzen 12a eingesetzt ist. Die Stutzenaufnahme 28 bildet im Wesentlichen eine zylinderförmige Vertiefung in dem Gehäuse 13. Der Fortsatz 17a ist mit der Stutzenaufnahme 28 integral ausgebildet.

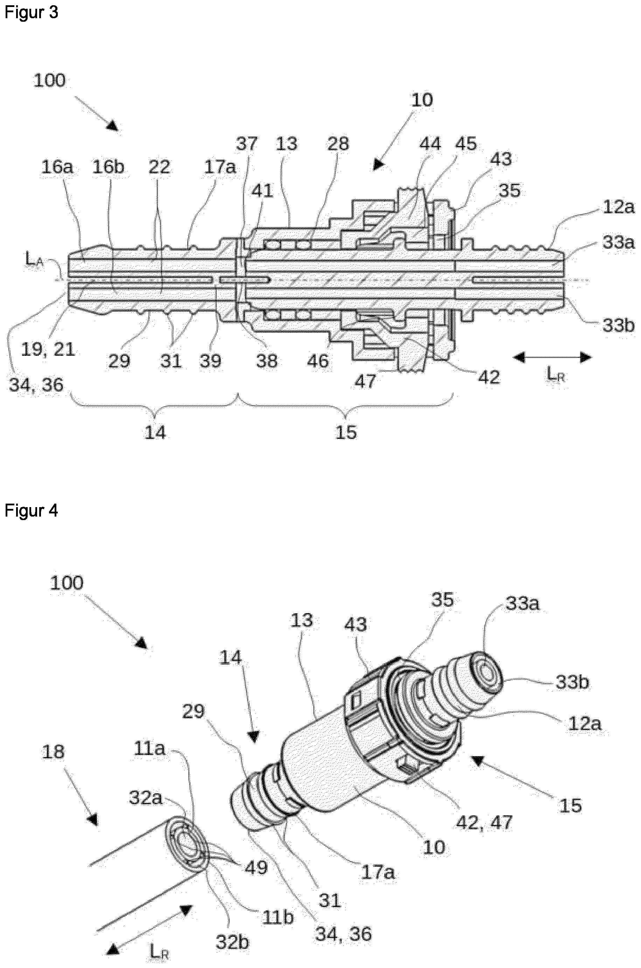

In Fig. 3 ist ein Längsschnitt durch die Vorrichtung 10 und den Anschlussstutzen 12a entlang der in Fig. 2 dargestellten Schnittlinie A-A gezeigt. Die Fluidleitung 18 ist der Einfachheit halber ausgeblendet. In Fig. 3 ist gezeigt, dass der Fortsatz 17a zwei Fluidkanäle 16a, 16b aufweist, die den Fortsatz 17a ausgehend von einem freien Ende 36 des Fortsatzes 17a bis hin zu der Stutzenaufnahme 28 durchdringen. Das freie Ende 36 bildet ein erstes Längsende 34 des Gehäuses 13. Dem ersten Längsende 34 gegenüberliegend ist ein zweites Längsende 35 vorgesehen, zu dem hin die Stutzenaufnahme 28 offen ist.

Die Fluidkanäle 16a, 16b verlaufen entlang der Gehäuselängsachse L_{A} parallel und sind in dem Fortsatz 17a integral ausgebildet. Die Fluidkanäle 16a, 16b sind voneinander vollständig getrennt. Mit anderen Worten sind die Fluidkanäle 16a, 16b voneinander separiert.

Die Fluidkanäle 16a, 16b des Fortsatzes 17a sind halbschalenförmig ausgebildet. Die Fluidkanäle 16a, 16b sind in Bezug auf die Gehäuselängsachse L_{A} spiegelsymmetrisch ausgebildet. Konkret sind die Fluidkanäle 16a, 16b in Bezug auf die Gehäuselängsachse La, exzentrisch angeordnet. Gleiches gilt für die Fluidkanäle 32a, 32b der beiden Leitungsabschnitte 11a, 11b und die Fluidkanäle 33a, 33b des Anschlussstutzens 12a.

Die Fluidkanäle 16a, 16b münden in die Stutzenaufnahme 18, wobei, wie in Fig. 3 gezeigt, die Fluidkanäle 16a, 16b des Fortsatzes 17a in Fluidkanäle 33a, 33b des Anschlussstutzens 12a übergehen. Konkret geht der erste Fluidkanal 16a des Fortsatzes 17a in den ersten Fluidkanal 33a des Anschlussstutzens 12a und der zweite Fluidkanal 16b des Fortsatzes 17a in den zweiten Fluidkanal 33b des Anschlussstutzens 12a über. Die ersten Fluidkanäle 16a, 33a und zweiten Fluidkanäle 16b, 33b des Fortsatzes 17a und des Anschlussstutzens 12a sind fluidverbunden.

Fig. 3 zeigt des Weiteren, dass in einem Übergang 37, der zwischen dem ersten und zweiten Aufnahmebereich 14, 15 liegt, ein Freiraum zwischen dem Anschlussstutzen 12a und dem Fortsatz 17a gebildet ist. Ferner zeigt Fig. 3, dass die Vorrichtung 10 ein Trenn- und Ausrichtelement 38 umfasst, dass zwischen dem Fortsatz 17a und dem Anschlussstutzen 12a angeordnet ist. Das Trenn- und Ausrichtelement 38 liegt radial zwischen den Fluidkanälen 16a, 16b, 33a, 33b. Das Trenn- und Ausrichtelement 38 greift einerseits in einen Mittelsteg 39 des Fortsatzes 17a und andererseits in ein Längsende 41 des Anschlussstutzens 12a ein. Das Trenn- und Ausrichtelement 38 ist vorzugsweise stegartig, insbesondere flach, ausgebildet. Das Trenn- und Ausrichtelement 38 bildet eine Verdrehsicherung für den Anschlussstutzen 12a. Mit anderen Worten hält das Trenn- und Ausrichtelement 38 den Anschlussstutzen 12a in einer festen Drehlage, bezogen auf die Gehäuselängsachse L_{A}. Ferner trennt das Trenn- und Ausrichtelement 38 im Übergang die ersten Fluidkanäle 16a, 33a und zweiten Fluidkanäle 16b, 33b voneinander. Das Trenn- und Ausrichtelement 38 überbrückt den Freiraum im Übergang 38 in Gehäuselängsrichtung L_{R} vollständig.

Aus Fig. 3 geht hervor, dass ein Spalt 19 radial zwischen den beiden Fluidkanälen 16a, 16b des Fortsatzes 17a ausgebildet ist. Der Spalt 19 bildet einen Freiraum 21, der schlitzförmig ist. Der Spalt 19 teilt den Fortsatz 17a, sodass dieser gabelförmig ausgebildet ist. Der Spalt 19 verläuft annähernd über die gesamte Länge des Fortsatzes 17a in Gehäuselängsrichtung L_{R}. Der Freiraum 21 ist vorzugsweise flach ausgebildet. Der Freiraum 21 bildet einerseits eine Aufnahme für einen Trennsteg 48 der Fluidleitung 18, der die Fluidkanäle 32a, 32b der Leitungsabschnitte 11a, 11b voneinander trennt. Andererseits dient der Freiraum 21 zur Ausrichtung der Drehlage der Fluidleitung 18 in Bezug auf die Fluidkanäle 16a, 16b des Fortsatzes 17a. Der Spalt 19 bzw. der Freiraum 21 ermöglicht somit eine Formschlussverbindung zwischen Fluidleitung 18 und Fortsatz 17a, welche ein Verdrehen der Fluidleitung 18 verhindert.

Aus der Fig. 3 geht hervor, dass der Anschlussstutzen 12a, wie der Fortsatz 17a, einen Spalt aufweisen kann, um eine Ausrichtung einer anzuschließenden Leitung zu ermöglichen sowie einen Formschluss zu realisieren.

Aus den Fig. 1 bis 3 geht weiter hervor, dass die Vorrichtung 10 ferner einen Verriegelungskörper 42 und eine Abdeckung 43 auf. Der Verriegelungskörper 42 weist ein ringförmig geschlossenes Ringelement 44 auf, von dem sich zum einen zwei einander radial gegenüberliegende Verriegelungselemente 45 und zirka 90° hierzu versetzt zum anderen zwei einander radial gegenüberliegende Entriegelungselemente (nicht dargestellt) in Gehäuselängsrichtung L_{R} erstrecken. Die Verriegelungselemente 45 sind hakenförmig ausgebildet und elastisch verformbar, insbesondere federelastisch. Beim Einstecken des Anschlussstutzens 12a werden die Verriegelungselemente 45 durch einen am Außenumfang ausgebildeten Vorsprung 46, insbesondere eine Rippe, angehoben, wobei die Verriegelungselemente 45 danach entgegen der Einsteckrichtung hinter dem Vorsprung 46 einrasten. Dadurch ist die Längslage des Anschlussstutzens 12a in der Stutzenaufnahme 28 fixiert. Zur Entriegelung des Anschlussstutzens 12a werden die Entriegelungselementen über Betätigungsabschnitte 47 gegen die Verriegelungselemente 45 bewegt, sodass diese in Außereingriff mit dem Vorsprung 46 des Anschlussstutzens 12a gebracht werden. In diesem Zustand ist der Anschlussstutzen 12a wieder aus dem Gehäuse 13 entnehmbar.

Um das Gehäuse 13 an seinem zweiten Längsende 35 abzudecken und gleichzeitig den Verriegelungskörper 42 in dem Gehäuse 13 zu halten, ist die Abdeckung 43 über das zweite Längsende 35 des Gehäuses 13 geschoben. Die Abdeckung 43 bildet einen Deckel, der mit dem Gehäuse 13 lösbar formschlüssig, insbesondere durch Klipsen, verbunden ist.

Fig. 4 bis 6 zeigen eine Verbindungsanordnung 100 nach einem zweiten erfindungsgemäßen Ausführungsbeispiel. Die Verbindungsanordnung 100 weist eine Vorrichtung 10, eine Fluidleitung 18 und einen Anschlussstutzen 12a auf. Die Vorrichtung 10 dient zur lösbaren Schnellverbindung von der Fluidleitung 18 und dem Anschlussstutzen 12a.

Wie in Fig. 4 erkennbar, umfasst die Fluidleitung 18 zwei Leitungsabschnitte 11a, 11b, die integral ausgebildet sind. Die Leitungsabschnitte 11a, 11b weisen jeweils einen Fluidkanal 32a, 32b auf, die parallel verlaufen. Ein erster 11a der beiden Leitungsabschnitte 11a, 11b ist radial innen und ein zweiter 11b der beiden Leitungsabschnitte 11a, 11b ist radial außen angeordnet. Die Leitungsabschnitte 11a, 11b sind konzentrisch angeordnet. Der erste Fluidkanal 32a ist Teil des ersten, insbesondere, zentralen Leitungsabschnitts 11a. Der zweite Fluidkanal 32b ist zwischen dem ersten und zweiten Leitungsabschnitt 11a, 11b als Ringspalt ausgebildet. Mit anderen Worten ist der zweite Fluidkanal 32b ringförmig um den ersten Leitungsabschnitt 11a vorgesehen.

Um die Lage der beiden Leitungsabschnitte 11a, 11b zueinander zu fixieren, ist zwischen den beiden Leitungsabschnitten 11a, 11b wenigstens ein Verbindungssteg 49 ausgebildet. Wie in Fig. 4 gezeigt, erstecken sich insgesamt vier Verbindungsstege 49 zwischen den beiden Leitungsabschnitten 11a, 11b zumindest in radialer Richtung und bevorzugt zusätzlich in axialer Richtung der Fluidleitung 18. Die Verbindungsstege 49 zentrieren den ersten Leitungsabschnitt 11a in dem zweiten Leitungsabschnitt 11b. Diese Ausbildung der Fluidleitung 18 kann als Rohr in Rohr-Leitung ("tube in tube") bezeichnet werden. Die Fluidleitung 18 kann starr oder flexibel ausgebildet sein. Bevorzugt ist die Fluidleitung 18 durch einen Schlauch gebildet.

Die Fig. 4 bis 6 zeigen, dass die Vorrichtung 10 ein Gehäuse 13 mit einem ersten Aufnahmebereich 14 und einem zweiten Aufnahmebereich 15 aufweist. Die beiden Aufnahmebereiche 14, 15 sind in einer Gehäuselängsrichtung L_{R} aneinander angrenzend ausgebildet. Die Gehäuselängsrichtung L_{R} verläuft zu einer Gehäuselängsachse L_{A} parallel. Das Gehäuse 13 weist also eine Gehäuselängsachse La, auf. Die Aufnahmebereich 14, 15 bilden Längsabschnitte des Gehäuses 13 entlang seiner Längsachse L_{A}. Der erste Aufnahmebereich 14 dient zur Aufnahme der Fluidleitung 18, konkret der beiden Leitungsabschnitte 11a, 11b der Fluidleitung 18. Der zweite Aufnahmebereich 15 dient zur Aufnahme des Anschlussstutzens 12a.

Der erste Aufnahmebereich 14 weist, wie in den Fig. 4 bis 6 erkennbar, einen Fortsatz 17a auf, der sich in einer von dem zweiten Aufnahmebereich 15 wegführenden Gehäuselängsrichtung L_{R} erstreckt. Der Fortsatz 17a bildet einen Anschlussnippel für die Fluidleitung 18. Der Fortsatz 17a weist eine auf seinem Außenumfang 29 ausgebildete Haltekontur 31, die rippenförmig oder rillenförmig ist. Dadurch wird der Halt zwischen der aufgesteckten Fluidleitung 18 und dem Fortsatz 17a verbessert. Der zweite Aufnahmebereich 15 umfasst eine Stutzenaufnahme 28, in die der Anschlussstutzen 12a eingesetzt ist. Die Stutzenaufnahme 28 bildet im Wesentlichen eine zylinderförmige Vertiefung in dem Gehäuse 13. Der Fortsatz 17a ist mit der Stutzenaufnahme 28 integral ausgebildet.

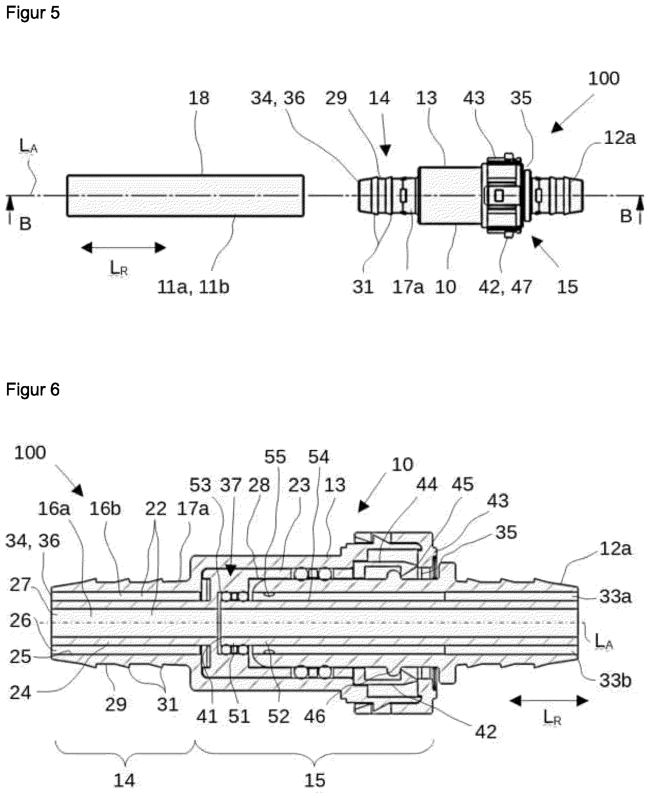

In Fig. 6 ist ein Längsschnitt durch die Vorrichtung 10 und den Anschlussstutzen 12a entlang der in Fig. 5 dargestellten Schnittlinie B-B gezeigt. Die Fluidleitung 18 ist der Einfachheit halber ausgeblendet. In Fig. 6 ist gezeigt, dass der Fortsatz 17a zwei Fluidkanäle 16a, 16b aufweist, die den Fortsatz 17a ausgehend von einem freien Ende 36 des Fortsatzes 17a bis hin zu der Stutzenaufnahme 28 durchdringen. Das freie Ende 36 bildet ein erstes Längsende 34 des Gehäuses 13. Dem ersten Längsende 34 gegenüberliegend ist ein zweites Längsende 35 vorgesehen, zu dem hin die Stutzenaufnahme 28 offen ist. Die Fluidkanäle 16a, 16b verlaufen entlang der Gehäuselängsachse L_{A} parallel. Die Fluidkanäle 16a, 16b sind voneinander vollständig getrennt. Mit anderen Worten sind die Fluidkanäle 16a, 16b voneinander separiert.

In Fig. 6 ist zu erkennen, dass die Vorrichtung 10 ein Fluidführungselement 23 zum Führen eines Fluidstroms aufweist, welches in das Gehäuse 13 eingesetzt ist. Das Fluidführungselement 23 ist einerseits in dem ersten Aufnahmebereich 14 und andererseits in dem zweiten Aufnahmebereich 15 des Gehäuses 13 angeordnet. Das Fluidführungselement 23 ist derart in den zweiten Aufnahmebereich 15 eingeschoben, dass es zusätzlich in den ersten Aufnahmebereich 14 ragt.

Das Fluidführungselement 23 weist einen rohrförmigen Abschnitt 24 und eine Stutzenaufnahme 28 zur Aufnahme des Anschlussstutzens 12a auf. Das Fluidführungselement 23 liegt auf der Gehäuselängsachse L_{A}. Das Fluidführungselement 23 umfasst ferner eine zentrale Durchgangsöffnung 27, die das Führungselement 23 von dem freien Ende 36 des Fortsatzes 17a bis hin zur Stutzenaufnahme 28 in Gehäuselängsrichtung L_{R} durchläuft. Die zentrale Durchgangsöffnung 23 bildet den ersten Fluidkanal 16a. Die zentrale Durchgangsöffnung 23 ist als Bohrung ausgebildet. Die zentrale Durchgangsöffnung 23 verläuft parallel zur Gehäuselängsachse L_{A}. Der erste Fluidkanal 16a des Fluidführungselements 23 mündet somit in die Stutzenaufnahme 28, wobei dieser dann in einen ersten Fluidkanal 33a des Anschlussstutzens 12a übergeht. Der erste Fluidkanal 33a des Anschlussstutzens 12a ist, wie bei dem Fluidführungselement 23, als zentrale Durchgangsöffnung ausgebildet, die den Anschlussstutzen 12a entlang der Gehäuselängsachse La, vollständig durchdringt. Die beiden ersten Fluidkanäle 16a, 33a des Fluidführungselements 23 und des Anschlussstutzens 12a sind somit miteinander fluidverbunden.

Um in einem Übergang 37 von dem Fluidführungselement 23 zu dem Anschlussstutzen 12a eine dichte Verbindung zu realisieren, weist der Anschlussstutzen 12a einen axialen Überstand 51 seines den ersten Fluidkanal 33a umgebenden rohrförmigen Abschnitts 52 auf, der in eine Vertiefung 53 des Fluidführungselements 23 einsitzt. Radial zwischen dem Überstand 51 und einer Innenwand der Vertiefung 53 ist wenigstens eine Dichtmittel, insbesondere ein O-Ring, vorgesehen, das den rohrförmigen Abschnitt 52 gegen das Fluidführungselement 23 abdichtet. Bevorzugt, wie im vorliegenden Fall, sind zwei axial nebeneinander angeordnete Dichtmittel, insbesondere O-Ringe, vorgesehen.

Gemäß Fig. 6 sind das Fluidführungselement 23 und das Gehäuse 13 konzentrisch angeordnet. Das Fluidführungselement 23 bildet mit seinem rohrförmigen Abschnitt 24 und einer Innenwand 25 des Fortsatzes 17a in dem ersten Aufnahmebereich 14 den zweiten Fluidkanals 16b aus. Der rohrförmige Abschnitt 24 und die Innenwand 25 definieren somit den zweiten Fluidkanal 16b. Konkret ist der zweite Fluidkanal 16b radial zwischen der Innenwand 25 des Fortsatzes 17a und dem rohrförmigen Abschnitt 24 gebildet. Der zweite Fluidkanal 16b ist als Ringspalt ausgebildet und durchzieht den Fortsatz 17a vollständig. Der zweite Fluidkanal 16b umgibt den ersten Fluidkanal 16a vollständig. Die Fluidkanäle 16a, 16b des Fortsatzes 17a bzw. des Fluidführungselements 23 sind konzentrisch ausgebildet. Der erste Fluidkanal 16a des Fluidführungselements 23 weist einen Strömungsquerschnitt 22 auf, der kreisrund ist. Der zweite Fluidkanal 16b des Fortsatz 17a umfasst einen Strömungsquerschnitt 22 der kreisringförmig ist. In dem Übergang 37 geht der zweite Fluidkanal 16b von dem ersten in den zweiten Aufnahmebereich 14, 15 über, wobei dieser mit einem zweiten Fluidkanal 33b des Anschlussstutzens 12a fluidverbunden ist.

Im Übergang 37 weist das Fluidführungselement 23 mehrere Öffnungen (nicht dargestellt) auf, die radial außen die Vertiefung 53 umgehend ausgebildet sind. Mit anderen Worten umfasst das Fluidführungselement 23 im Übergang 37 mehrere Bypassöffnungen auf, die den zweiten Fluidkanal des Fortsatzes 17a mit dem zweiten Fluidkanal 33b des Anschlussstutzens 12a verbinden. Es führt somit ein oder mehrere Bypasskanäle radial außen an der Vertiefung 53 vorbei. Der Anschlussstutzen 12a weist in eine den zweiten Fluidkanal 33b umgebenden Außenwand 54 mehrere Öffnungen 55 auf, durch die die Bypassöffnungen(-kanäle) des Fluidführungselements 23 mit dem zweiten Fluidkanal 16b fluidverbunden sind. So besteht zwischen dem zweiten Fluidkanal 16b des Fortsatzes 17a bzw. des ersten Aufnahmebereichs 14 über die Bypassöffnungen(-kanäle) des Fluidführungselements 23 eine Fluidverbindung mit dem zweiten Fluidkanal 33b des Anschlussstutzens 12a.

Hinsichtlich der Ausgestaltung und Anordnung sowie Funktion des Verriegelungskörpers 42 und der Abdeckung 43 wird auf die entsprechenden Beschreibungspassagen betreffend die Verbindungsanordnung 100 gemäß Fig. 1 bis 3 verwiesen, um eine Dopplung zu vermeiden. Das Verriegelungselement 42 und die Abdeckung 43 der beiden Verbindungsanordnungen 100 gemäß erstem und zweitem Ausführungsbeispiels sind identisch ausgestaltet. Gleiches gilt für die Haltekontur 31 zur Aufnahme der Fluidleitung 18, wobei darauf hingewiesen wird, dass die Haltekontur 31 nicht auf die rippenförmige Ausgestaltung eingeschränkt ist, sondern eine andere Gestalt zum Halten der Fluidleitung 18 aufweisen kann.

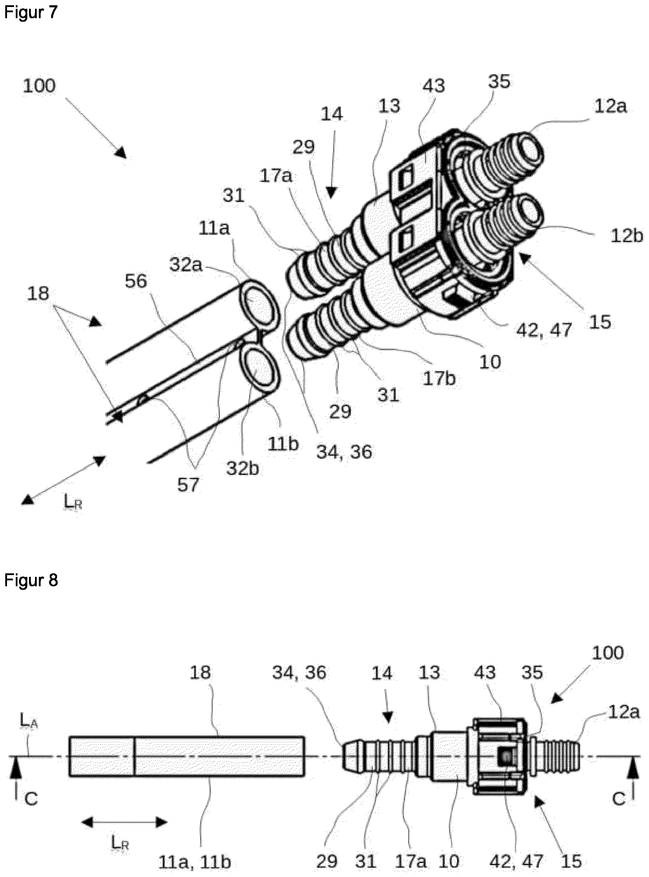

Fig. 7 bis 9 zeigen eine Verbindungsanordnung 100 nach einem dritten erfindungsgemäßen Ausführungsbeispiel. Die Verbindungsanordnung 100 weist eine Vorrichtung 10, eine Fluidleitung 18 und zwei Anschlussstutzen 12a, 12b auf. Die Vorrichtung 10 dient zur lösbaren Schnellverbindung der Fluidleitung 18 und der Anschlussstutzen 12a, 12b.

Wie in Fig. 7 erkennbar, die Fluidleitung 18 zwei Leitungsabschnitte 11a, 11b, die jeweils einen Fluidkanal 32a, 32b aufweisen. Die beiden Leitungsabschnitte 11a, 11b sind parallel geführt und durch einen Zwischensteg 56 miteinander verbunden. Der Zwischensteg 56 erstreckt sich zwischen den beiden Leitungsabschnitten 11a, 11b und weist vorzugsweise eine geringe Stegdicke auf. Die beiden Fluidkanäle 32a, 32b verlaufen somit voneinander separat. Der Zwischensteg 56 umfasst mehrere Durchgangsöffnungen 57, um die Fluidleitung 18 zu befestigen. Der Zwischensteg 56 ist so ausgebildet, dass dieser entlang der Längserstreckung der Fluidleitung 18 aufgetrennt werden kann. Vorzugsweise kann der Zwischensteg 56 per Hand getrennt werden. Dadurch sind die beiden Leitungsabschnitte 11a, 11b bei Bedarf voneinander trennbar bzw. vereinzelbar. Die Fluidleitung 18 kann starr oder flexibel ausgebildet sein. Bevorzugt ist die Fluidleitung 18 durch zwei miteinander verbundenen Schläuche gebildet.

Die Fig. 7 bis 9 zeigen, dass die Vorrichtung 10 ein Gehäuse 13 mit einem ersten Aufnahmebereich 14 und einem zweiten Aufnahmebereich 15 aufweist. Die beiden Aufnahmebereiche 14, 15 sind in einer Gehäuselängsrichtung L_{R} aneinander angrenzend ausgebildet. Die Gehäuselängsrichtung L_{R} verläuft zu zwei Gehäuselängsachsen L_{A} parallel, die wiederum parallel verlaufen. Das Gehäuse 13 weist also zwei Gehäuselängsachse La, auf. Die Aufnahmebereich 14, 15 bilden Längsabschnitte des Gehäuses 13 entlang der Längsachsen L_{A}. Der erste Aufnahmebereich 14 dient zur Aufnahme der Leitungsabschnitte 11a, 11b der Fluidleitung 18. Der zweite Aufnahmebereich 15 dient zur Aufnahme von den beiden Anschlussstutzen 12a, 12b.

Der erste Aufnahmebereich 14 weist, wie in den Fig. 7 bis 9 erkennbar, zwei Fortsätze 17a, 17b auf, die sich in einer von dem zweiten Aufnahmebereich 15 wegführenden Gehäuselängsrichtung L_{R} erstrecken. Die Fortsätze 17a, 17b bilden jeweils einen Anschlussnippel für die Leitungsabschnitte 11a, 11b der Fluidleitung 18. Die Fortsätze 17a, 17b weisen jeweils eine auf deren Außenumfang 29 ausgebildete Haltekontur 31, die rippenförmig oder rillenförmig ist. Dadurch wird der Halt zwischen dem aufgesteckten Leitungsabschnitt 11a, 11b der Fluidleitung 18 und dem jeweiligen Fortsatz 17a, 17b verbessert. Die Fortsätze 17a, 17b sind quer zur Gehäuselängsrichtung L_{R} voneinander beabstandet.

Der zweite Aufnahmebereich 15 umfasst zwei Stutzenaufnahmen 28, in die die Anschlussstutzen 12a, 12b eingesetzt sind. Die Stutzenaufnahmen 28 bilden im Wesentlichen jeweils eine zylinderförmige Vertiefung in dem Gehäuse 13. Die Fortsätze 17a, 17b sind mit den Stutzenaufnahmen 28 integral ausgebildet.

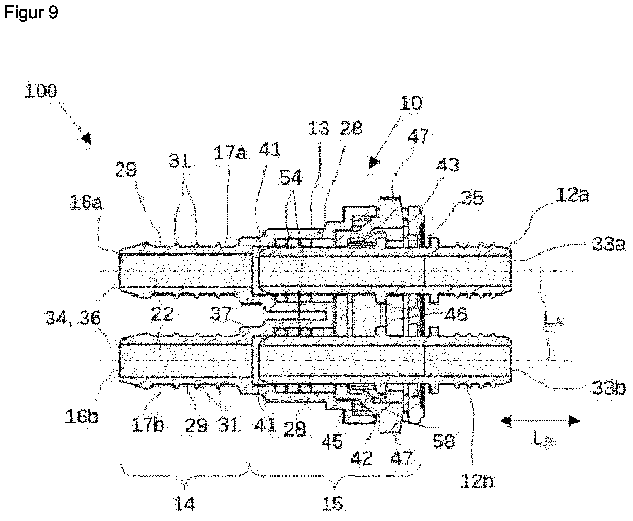

In Fig. 9 ist ein Längsschnitt durch die Vorrichtung 10 und die Anschlussstutzen 12a, 12b entlang der in Fig. 8 dargestellten Schnittlinie C-C gezeigt. Die Fluidleitung 18 ist der Einfachheit halber ausgeblendet. In Fig. 9 ist gezeigt, dass die Fortsätze 17a, 17b zwei Fluidkanäle 16a, 16b aufweisen. Ein erster 17a der Fortsätze 17a, 17b beinhaltet einen ersten 16a der Fluidkanäle 16a, 16b. Ein zweiter 17b der Fortsätze 17b beinhaltet einen zweiten 16b der Fluidkanäle 16a, 16b. Je Fortsatz 17a, 17b ist somit einer der beiden Fluidkanäle 16a, 16b vorgesehen.

Die Fluidkanäle 16a, 16b durchdringen die Fortsätze 17a, 17b ausgehend von einem freien Ende 36 des jeweiligen Fortsatzes 17a, 17b bis hin zu der jeweiligen Stutzenaufnahme 28 (siehe Fig. 9). Die freien Enden 36 bilden ein erstes Längsende 34 des Gehäuses 13. Dem ersten Längsende 34 gegenüberliegend ist ein zweites Längsende 35 vorgesehen, zu dem hin die Stutzenaufnahmen 28 offen sind. Die Fluidkanäle 16a, 16b verlaufen entlang der Gehäuselängsachsen L_{A} parallel. Die Fluidkanäle 16a, 16b sind voneinander vollständig getrennt. Mit anderen Worten sind die Fluidkanäle 16a, 16b voneinander separiert.

Die Fluidkanäle 16a, 16b der Fortsätze 17a, 17b bilden jeweils eine zentrale Durchgangsöffnung durch den Fortsatz 17a, 17b, die in Gehäuselängsrichtung L_{R} verläuft. In einem Übergang 37, der zwischen dem ersten und zweiten Aufnahmebereich 14, 15 jeweils zwischen dem Fortsatz 17a, 17b und einem Längsende 41 des jeweiligen Anschlussstutzens 12a, 12b liegt, ist ein Freiraum geschaffen, in den das Längsende 41 einsitzt. Um eine dichte Verbindung zu realisieren, sind an einer Außenwand 54 der Anschlussstutzen 12a, 12b zwei Dichtmittel, insbesondere O-Ringe, angeordnet, durch die der jeweilige Anschlussstutzen 12a, 12b gegen die zugehörige Stutzenaufnahme 28 abgedichtet ist.

Die Anschlussstutzen 12a, 12b weisen jeweils, wie die Fortsätze 17a, 17b, eine zentrale Durchgangsöffnung auf, die an die Durchgangsöffnung der Fortsätze 17a, 17b anschließt. Die zentrale Durchgangsöffnung der Fortsätze 17a, 17b bilden die beiden Fluidkanäle 16a, 16b und die zentrale Durchgangsöffnung der Anschlussstutzen 12a, 12b bilden zwei Fluidkanäle 33a, 33b. Wie in Fig. 9 gezeigt, ist der erste Fluidkanal 16a des ersten Fortsatzes 17a mit dem ersten Fluidkanal 33a des ersten Anschlussstutzens 12a fluidverbunden. Ferner ist der zweite Fluidkanal 16b des zweiten Fortsatzes 17b mit dem zweiten Fluidkanal 33b des zweiten Anschlussstutzens 12b fluidverbunden.

Wie in Fig. 9 erkennbar ist, umfasst die Vorrichtung 10 einen Verrieglungskörper 42 und eine Abdeckung 42, die das Gehäuse 13 an dem zweiten Längsende 35 verschließt. Der Verriegelungskörper 42 weist ein umfänglich geschlossenes Halteelement 48 auf, das zum einen zwei einander gegenüberliegende und radial nach außen ersteckende Verriegelungselemente 45 aufweist und zum anderen Entriegelungselemente (nicht dargestellt) umfasst. Das Halteelement 48 weist je Anschlussstutzen 12a, 12b einen Durchgang auf, der in eine anschließende Stutzenaufnahme 28 mündet.

Die Verriegelungselemente 45 sind hakenförmig ausgebildet und elastisch verformbar, insbesondere federelastisch. Beim Einstecken des jeweiligen Anschlussstutzens 12a, 12b werden die Verriegelungselemente 45 durch einen am Außenumfang ausgebildeten Vorsprung 46, insbesondere eine Rippe, angehoben, wobei die Verriegelungselemente 45 danach entgegen der Einsteckrichtung hinter dem Vorsprung 46 einrasten. Dadurch ist die Längslage der Anschlussstutzen 12a, 12b in der jeweiligen Stutzenaufnahme 28 fixiert. Zur Entriegelung der Anschlussstutzen 12a, 12b werden die Entriegelungselementen über Betätigungsabschnitte 47 gegen die Verriegelungselemente 45 bewegt, sodass diese in Außereingriff mit dem Vorsprung 46 des jeweiligen Anschlussstutzens 12a, 12b gebracht werden. In diesem Zustand sind die Anschlussstutzen 12a, 12b wieder aus dem Gehäuse 13 entnehmbar.

Um das Gehäuse 13 an seinem zweiten Längsende 35 abzudecken und gleichzeitig den Verriegelungskörper 42 in dem Gehäuse 13 zu halten, ist die Abdeckung 43 über das zweite Längsende 35 des Gehäuses 13 geschoben. Die Abdeckung 43 bildet einen Deckel, der mit dem Gehäuse 13 lösbar formschlüssig, insbesondere durch Klipsen, verbunden ist

Hinsichtlich der Ausgestaltung und Anordnung sowie Funktion der Haltekontur 31 wird auf die entsprechenden Beschreibungspassagen betreffend die Verbindungsanordnung 100 gemäß Fig. 1 bis 3 verwiesen, um eine Dopplung zu vermeiden. Ferner wird darauf hingewiesen, dass die Haltekontur 31 nicht auf die rippenförmige Ausgestaltung eingeschränkt ist, sondern eine andere Gestalt zum Halten der Fluidleitung 18 aufweisen kann.

### Bezugszeichenliste

- 10: Vorrichtung
- 11a, 11b: Leitungsabschnitte
- 12a, 12b: Anschlussstutzen
- 13: Gehäuse
- 14: erster Aufnahmebereich
- 15: zweiter Aufnahmebereich
- 16a, 16b: Fluidkanäle des ersten Aufnahmebereichs
- 17a, 17b: Fortsatz
- 18: Fluidleitung
- 19: Spalt
- 21: Freiraum
- 22: Strömungsquerschnitt
- 23: Fluidführungselement
- 24: rohrförmiger Abschnitt
- 25: Innenwand
- 26: Ringspalt
- 27: zentrale Durchgangsöffnung
- 28: Stutzenaufnahme
- 29: Außenumfang
- 31: Haltekontur
- 32a, 32b: Fluidkanäle der Leitungsabschnitte
- 33a, 33b: Fluidkanäle des Anschlussstutzens
- 34: erstes Längsende
- 35: zweites Längsende
- 36: freies Ende
- 37: Übergang
- 38: Trenn- und Ausrichtelement
- 39: Mittelsteg
- 41: Längsende des Anschlussstutzens
- 42: Verriegelungskörper
- 43: Abdeckung
- 44: Ringelement
- 45: Verriegelungselement
- 46: Vorsprung
- 47: Betätigungsabschnitt
- 48: Trennsteg
- 49: Verbindungssteg
- 51: Überstand
- 52: rohrförmiger Abschnitt des Anschlussstutzens
- 53: Vertiefung
- 54: Außenwand des Anschlussstutzens
- 55: Öffnungen der Außenwand
- 56: Zwischensteg
- 57: Durchgangsöffnungen der Fluidleitung
- 58: Halteelement

- 100: Verbindungsanordnung

- L_{R}: Gehäuselängsrichtung
- L_{A}: Gehäuselängsachse

## Patentansprüche

1. Vorrichtung (10) zur Schnellverbindung von mehreren fluidführenden Leitungsabschnitten (11a, 11b) mit einem oder mehreren Anschlussstutzen (12a, 12b), insbesondere SAE-Stutzen, wobei die Vorrichtung (10) wenigstens ein Gehäuse (13) umfasst, das einerseits einen ersten Aufnahmebereich (14), insbesondere Steckbereich, zur Aufnahme von wenigstens zwei Leitungsabschnitten (11a, 11b) und andererseits einen zweiten Aufnahmebereich (15) zur Aufnahme eines oder mehrerer Anschlussstutzen (12a, 12b) aufweist, die in Gehäuselängsrichtung (L_{R}) aneinander angrenzen, wobei der erste Aufnahmebereich (14) wenigstens zwei Fluidkanäle (16a, 16b) umfasst, die in dem ersten Aufnahmebereich (14) voneinander getrennt verlaufen und in den zweiten Aufnahmebereich (15) derart übergehen, dass die Fluidkanäle (16a, 16b) mit dem einen oder den mehreren Anschlussstutzen (12a, 12b) fluidverbindbar sind.

2. Vorrichtung (10) nach Anspruch 1,
**dadurch gekennzeichnet, dass**
der erste Aufnahmebereich (14) wenigstens einen sich in Gehäuselängsrichtung (L_{R}) erstreckenden Fortsatz (17a) aufweist, auf den eine die Leitungsabschnitte (11a, 11b) aufweisende Fluidleitung (18) aufsteckbar ist, insbesondere wobei die Fluidkanäle (16a, 16b) in dem Fortsatz (17a) integral ausgebildet sind, wobei die Fluidkanäle (16a, 16b) in Gehäuselängsrichtung (L_{R}) im Wesentlichen parallel verlaufen.

3. Vorrichtung (10) nach Anspruch 2,
**dadurch gekennzeichnet, dass**
ein Spalt (19) vorgesehen ist, der den Fortsatz (17a) in Gehäuselängsrichtung (L_{R}) zumindest teilweise unterteilt, wobei der Spalt (19) einen Freiraum (21) zwischen dem ersten und zweiten Fluidkanal (16a, 16b) bildet.

4. Vorrichtung (10) nach einem der vorhergehenden Ansprüche,
**dadurch gekennzeichnet, dass**
die Fluidkanäle (16a, 16b) jeweils einen Strömungsquerschnitt (22) aufweisen, der im Wesentlichen halbschalenförmig, kreisringförmig oder kreisförmig ist.

5. Vorrichtung (10) nach einem der vorhergehenden Ansprüche,
**dadurch gekennzeichnet, dass**
die Fluidkanäle (16a, 16b) in Bezug auf eine Gehäuselängsachse (L_{A}) exzentrisch oder konzentrisch angeordnet sind.

6. Vorrichtung (10) nach einem der vorhergehenden Ansprüche,
**dadurch gekennzeichnet, dass**
wenigstens ein Fluidführungselement (23) zum Führen des Fluidstroms in das Gehäuse (13) eingesetzt ist, wobei das Fluidführungselement (23) die Fluidkanäle (16a, 16b) zumindest abschnittsweise zusammen mit dem Gehäuse (13) bildet, insbesondere wobei das Fluidführungselement (23), insbesondere der rohrförmige Abschnitt (24), eine zentrale Durchgangsöffnung (27) in Gehäuselängsrichtung (L_{R}) umfasst, die einen zweiten (16b) der Fluidkanäle (16a, 16b) bildet.

7. Vorrichtung (10) nach Anspruch 6,
**dadurch gekennzeichnet, dass**
das Fluidführungselement (23) wenigstens einen rohrförmigen Abschnitt (24) aufweist, der in dem Fortsatz (17a) angeordnet ist und zusammen mit einer Innenwand (25) des Fortsatzes (17a) einen ersten (16a) der Fluidkanäle (16a, 16b) als Ringspalt (26) ausbildet.

8. Vorrichtung (10) nach einem der Ansprüche 6 oder 7,
**dadurch gekennzeichnet, dass**
das Fluidführungselement (23) wenigstens eine Stutzenaufnahme (28) zum Aufnehmen des Anschlussstutzens (12a) aufweist.

9. Vorrichtung (10) nach einem der vorhergehenden Ansprüche, insbesondere nach Anspruch 1,
**dadurch gekennzeichnet, dass**
der erste Aufnahmebereich (14) wenigstens zwei sich in Gehäuselängsrichtung (L_{R}) erstreckende Fortsätze (17a, 17b) aufweist, wobei jeweils einer der Fluidkanäle (16a, 16b) in einem der beiden Fortsätze (17a, 17b) verläuft.

10. Vorrichtung (10) nach Anspruch 9,
**dadurch gekennzeichnet, dass**
die Fortsätze (17a, 17b) nebeneinander angeordnet sind und im Wesentlichen parallel verlaufen, wobei auf jeden der Fortsätze (17a, 17b) eine Fluidleitung (18) aufsteckbar ist, die, insbesondere nur, einen der mehreren Leitungsabschnitte (11a, 11b) aufweist.

11. Vorrichtung (10) nach einem der vorhergehenden Ansprüche, insbesondere nach Anspruch 9 oder 10,
**dadurch gekennzeichnet, dass**
der Fortsatz (17a, 17b) oder die Fortsätze (17a, 17b) eine auf deren Außenumfang (29) ausgebildete Haltekontur (31) zum Halten einer Fluidleitung (18), insbesondere einer Schlauchleitung, aufweisen.

12. Verbindungsanordnung (100) mit einer Vorrichtung (10) nach einem der vorhergehenden Ansprüche, wenigstens zwei Leitungsabschnitten (11a, 11b) und einem oder mehreren Anschlussstutzen (12a, 12b), wobei die Leitungsabschnitte (11a, 11b) von dem ersten Aufnahmebereich (14) aufgenommen sind und der eine oder die mehreren Anschlussstutzen (12a, 12b) von dem zweiten Aufnahmebereich (15) aufgenommen sind derart, dass die beiden Leitungsabschnitte (11a, 11b) mit einem Anschlussstutzen (12a) fluidverbunden sind oder die Leitungsabschnitte (11a, 11b) jeweils mit einem Anschlussstutzen (12a, 12b) fluidverbunden sind.

13. Verbindungsanordnung (100) nach Anspruch 12,
**dadurch gekennzeichnet, dass**
die beiden Leitungsabschnitte (11a, 11b) in einer Fluidleitung (18) zusammengefasst sind und jeweils einen Fluidkanal (32a, 32b) umfassen, oder je einer der Leitungsabschnitte (11a, 11b) in einer separaten Fluidleitung (18) verläuft, wobei jeder Leitungsabschnitt (11a, 11b) einen Fluidkanal (32a, 32b) umfasst.

14. Verbindungsanordnung (100) nach Anspruch 12 oder 13,
**dadurch gekennzeichnet, dass**
der Anschlussstutzen (12a) wenigstens zwei Fluidkanäle (33a, 33b) umfasst, die in dem Anschlussstutzen (12a) voneinander getrennt verlaufen und mit den zwei Fluidkanälen (16a, 16b) des ersten Aufnahmebereichs (14) des Gehäuses (13) der Vorrichtung (10) fluidverbunden sind.

15. Verbindungsanordnung (100) nach Anspruch 12 oder 13,
**dadurch gekennzeichnet, dass**
wenigstens zwei Anschlussstutzen (12a, 12b) vorgesehen sind, wobei jeder der Anschlussstutzen (12a, 12b) einen Fluidkanal (33a, 33b) umfasst, der mit einem der beiden Fluidkanäle (16a, 16b) des ersten Aufnahmebereichs (14) fluidverbunden ist.
